Europäisches Patentamt

**European Patent Office**

**Office européen des brevets**

(11) Publication number: **0 226 782**
A1

(12) **EUROPEAN PATENT APPLICATION**

(21) Application number: **86115458.1**

(22) Date of filing: **07.11.86**

(51) Int. Cl.⁴: **F 41 H 1/04**
**A 42 B 3/00**

(30) Priority: **20.12.85 ES 550268**

(43) Date of publication of application:
**01.07.87 Bulletin 87/27**

(84) Designated Contracting States:
**AT BE CH DE FR GB IT LI LU NL SE**

(71) Applicant: **SEINVE, S.A.**
**Tomás Breton 60 Apart. 17.131**
**ES-28045 Madrid 7(ES)**

(72) Inventor: **Cuesta, Carlos Pineiro**
**C/ Calvo Sotelo No. 29 Blq.-8 2lda**
**Algete Madrid(ES)**

(72) Inventor: **Camarasa, Diego Mora**
**C/Castillo de Manzanares Na 8**
**Villanueva de la Canada Madrid(ES)**

(74) Representative: **Puschmann, Heinz H. et al,**
**Spott und Puschmann Patentanwälte**
**Sendlinger-Tor-Platz 11**
**D-8000 München 2(DE)**

(54) **Improved protective ballistic helmet.**

(57) Ballistic helmet for the personal use of the armed or security forces consisting of a semi-ellipsoidal shell with irregularities, the edges of the helmet have a rubber profile binding (22) and shock absorbers (20, 21) on the inside rim, further on the inside of the helmet there is a suspension assembly which is secured by devices which allow correct balancing, the first of which has bands or belts (6) with adjusting and tightening elements and canvas strip forming the crown, the second device is made up of the chinstrap unit (23) which has adjustment devices on to the chin with an anatomically designed chin cup (24).

Fig. 1

EP 0 226 782 A1

## IMPROVED PROTECTIVE BALLISTIC HELMET

The object of this invention consists of a ballistic protective helmet for the personal use of the armed or security forces, which meets technical specifications and passes current quality and comfort tests and trials.

There is a variety of types of ballistic helmets used by different armies or bodies responsible for upholding order and the law. Outstanding is the metal type, which originated in the last world conflict, and which has been all but replaced by the hardened plastic types, because of its excessive weight.

Current requirements tend towards helmets which, while of sufficient ballistic integrity, are also sufficiently light: this latter factor has led to the use of sythetic or glass fibres and, in particular, aramide or polyamide fibres. The helmet of the present invention can be developed using the procedure which is described in Spanish patent no. 530.361, or with any other known procedure using synthetic fibre of the high strength aramide or polyamide type, such as Kevlar and ballistic nylon.

Amongst the many advantages of a ballistic helmet in aramide or polyamide, the most significant is that of obtaining a cheaper helmet which has the required ballistic integrity and is relatively lighter.

Other advantages of this helmet, apart from those which make it ideal for protecting the user from the mechanical effects of impacts, blows or piercing, are as follows: the highly functional comfort and balance conditions, the possibility of wearing glasses, including those for night vision, or other facial devices, such as chemical or gas masks, and the fact that it covers the neck, forehead and ears, without limiting head movement nor reducing visibility or hearing of the user.

BRIEF DESCRIPTION OF THE INVENTION

The helmet which is the object of this Patent consists of a semi-ellipsoidal shell with irregularities, the edges of which have a rubber profile binding, and in the inside rim of which shock absorbers are backed in position.

The helmet has securing devices: one is inside, made up of the suspension assembly which is secured by means of special devices which allow for correct balancing: the bands or belts which make it up have adjusting and tightening elements, and canvas strips forming the crown. The second securing device is made up of the chinstrap unit which has adjustment devices on to the chin with an anatomically designed chin cup.

BRIEF DESCRIPTION OF THE DRAWINGS

In order to provide a more detailed description and understanding of the helmet which is the object of this invention, the following drawings are attached, by way of illustration and without limitation:

Figure 1 is a lateral view with longitudinal cross-section.

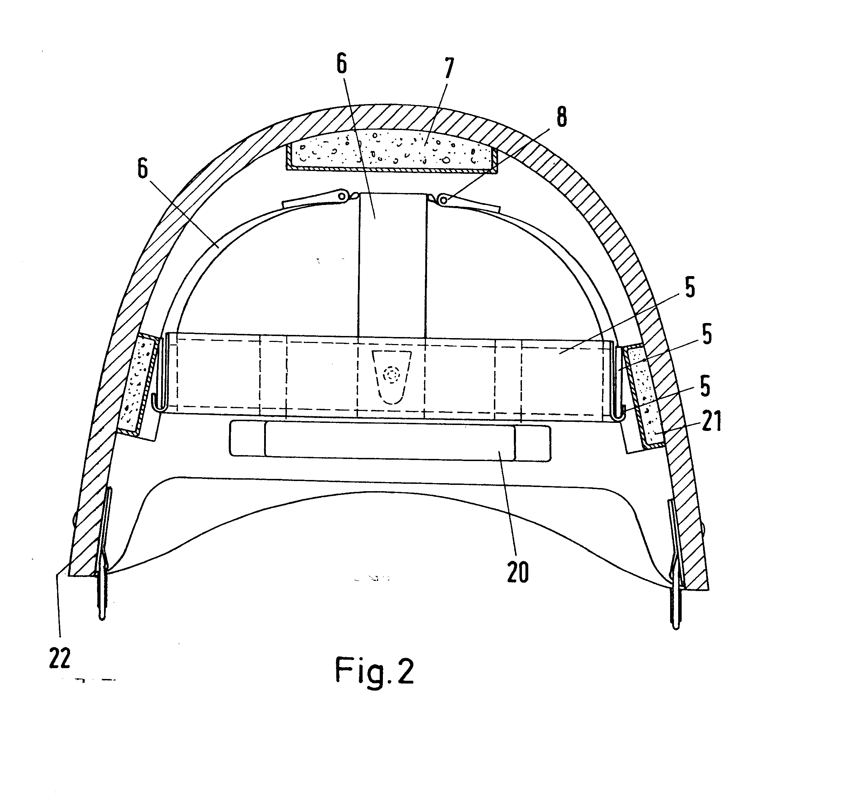

Figure 2 is a frontal view with transverse cross-section.

Figure 3 is a view of the interior, seen from below.

Figure 4 is a general view of the chin strapping.

DESCRIPTION OF THE INVENTION

This is a ballistic helmet laminated in several layers of synthetic fibre fabric of the high strength aramide or polyamide type, made by superimposing several strata which are resin-impregnated and submitted simultaneously to pressure and heat, five layers for preference.

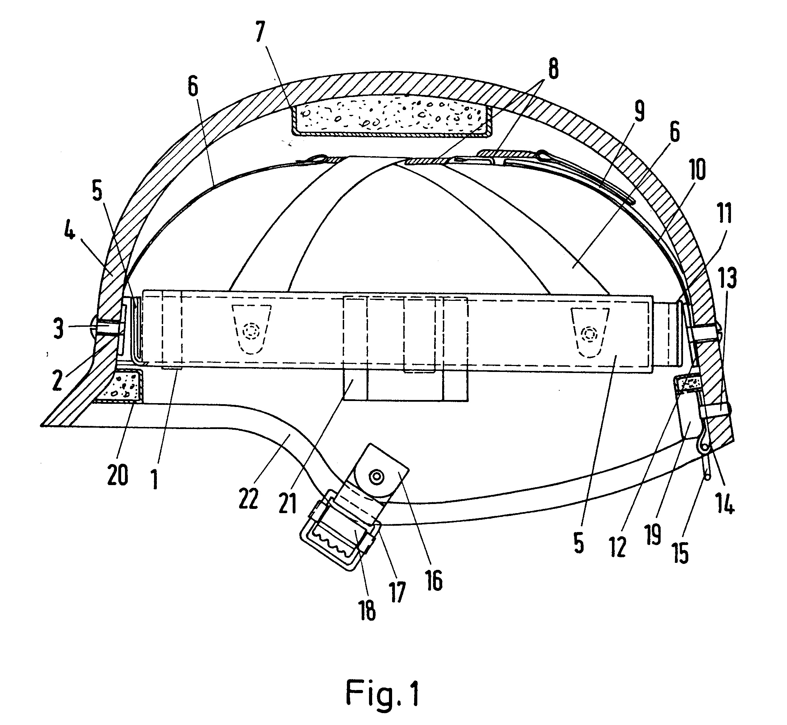

Figure 1 shows the preferred shape of the outline of the helmet, with a lengthwise cross-section, in which the thickness, 4, can be seen: the bottom is bound with a rubber profile, 22, which is U-shaped. The surface of the

0226782

helmet has localised securing screws, 3, which, with their nuts, 2, hold the support assembly in place, 5.

In the bottom centre of the helmet (figure 1), below the ear element, a hinged part is connected, 16, which, together with the buckle, 17, and its tensor, 18, is used to fit the chin unit into the helmet.

At the back, a ring, 15, is fitted to the helmet by means of a hinge, 14, and a rivet, 13, so that the helmet can be hung from a support element when not being worn.

Inside, attached to the surface of the helmet, there are four shock-absorbers, preferably of sponge-rubber: two of these are lateral, 21, and rectangular, fitting over the ears, one is frontal, 20, quadrangular, fitted on the visor division, one at the rear, 19, at the level of the rivet holding ring 15 in place, and one in the top of the helmet, and cylindrical in shape, 7.

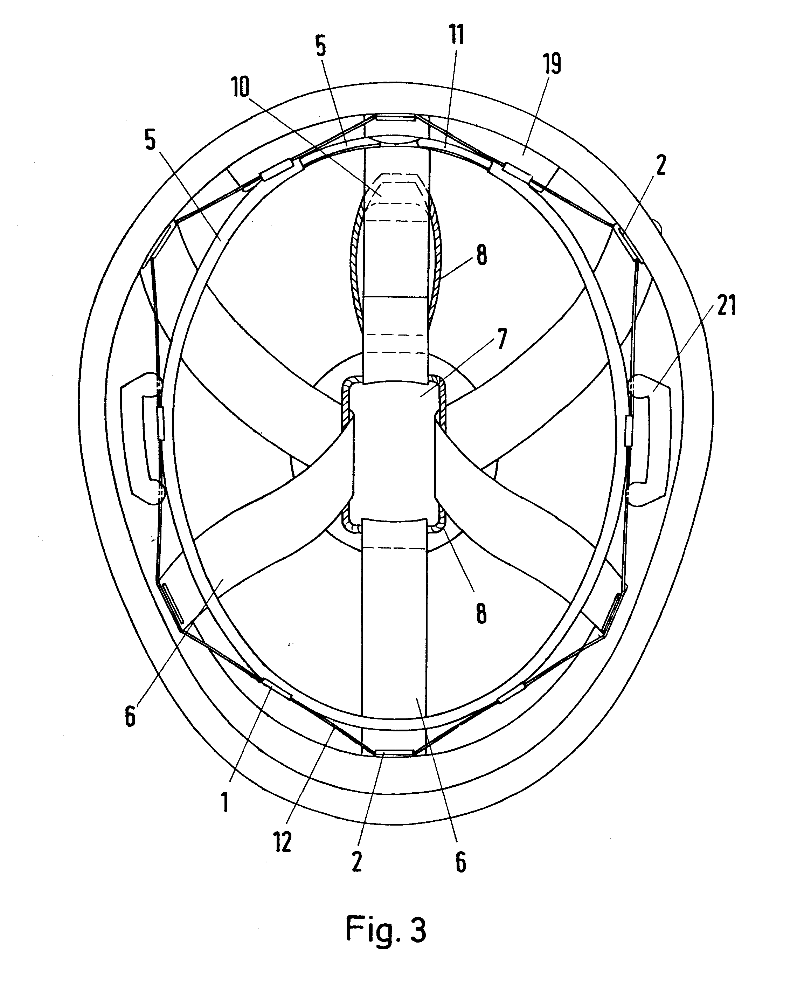

The mount unit, 5, is made of a velcro strip sewn on to a canvas strip, all of which is sheathed by a band of hide to which are adapted six meraklon canvas tapes, 6, closed by a nylon adjustment cord, 8, with an adjustable clip, 9, so that the unit as a whole has the appearance of a crown. Figure 3 shows this crown frame and its adjusting components, which consist of a tightening device, 11, and a crown adjustment clip, 10, which is fixed to the inside of the helmet by means of six tape mounts, 12.

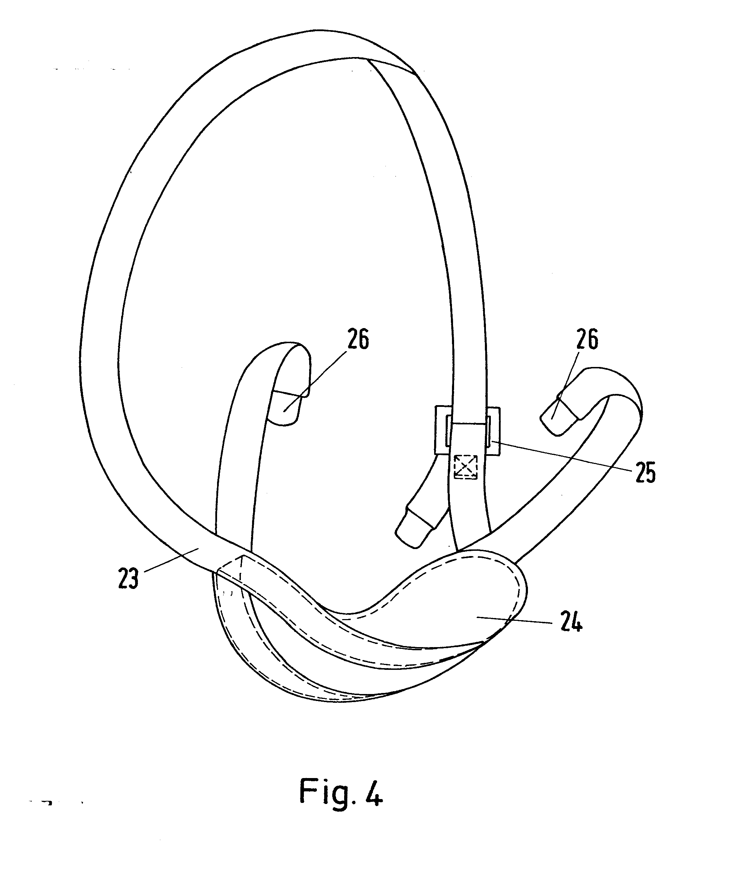

Figure 4 shows the chinstrap component, 23, which consists of two canvas strips which cross in the area of the chin, where an anatomically designed chin cup is incorporated, 24. Two of the tapes join in a tightening clip, 25, while the other two are coupled to the helmet tightening component, 18: the ends of the tapes are capped by metallic or polyester components, 26.

Following sufficient description of the nature of the invention, it is expressly declared that any modification

0226782

of detail introduced therein shall be deemed to be included
in the protection provided by these Letters of Patent,
insofar as not altering or modifying the characteristic
purpose of the invention itself.

## C L A I M S

1.- IMPROVED BALLISTIC PROTECTIVE HELMET for protection of the user from mechanical effects derived from the impact of projectiles, shocks and piercing, which maintains excellent conditions of comfort and functionality, and which is made up of the following:

a) A semi-ellipsoidal aramide mould with rimmed edges and internal peripheral shock absorbers.

b) A suspension element, with strips or belts, with adjusting and tightening components, fixed to the helmet by means of special securing devices, to allow for correct balancing.

c) A chinstrap assembly with adjustment devices for coupling to the chin with an anatomically designed cup.

2.- IMPROVED BALLISTIC PROTECTIVE HELMET, according to claim 1, wherein the said helmet or semi-ellipsoidal mould is made of several layers of high strength aramide type synthetic fibre, five for preference, in order to give a maximum weight of 1300 g irrespective of the anatomically standardised size.

3.- IMPROVED BALLISTIC PROTECTIVE HELMET, according to claim 1 wherein the outline has a ribbing, for preference made of rubber, firmly adhered to the bottom, and a rear shock absorber fixed inside to a hinge piece from which a ring is suspended and which is rivetted to the surface of the helmet: the said ring is the component for securing or hanging the helmet when not being worn.

4.- IMPROVED BALLISTIC PROTECTIVE HELMET, according to claim 1, wherein the chinstrap element is made up of two crisscrossed strips, into which a flexible cup may be incorporated for fitting to the chin: the said strips are finished in end pieces and an adjustment clip, adjustable on the helmet.

5.- IMPROVED BALLISTIC PROTECTIVE HELMET, according to claims 1 and 4, wherein the chinstrap assembly is adjusted on the helmet by means of two clips for tightening and securing to the said helmet, on the sides, by means of hinge pieces rivetted to the surface.

6.- IMPROVED BALLISTIC PROTECTIVE HELMET, according to claim 1, wherein the suspension assembly is made up of a velcro strip sewn to a canvas tape so as to form an inside crown moored on to the surface of the helmet at six diametrically opposed points, using screws and nuts, with tightening supports.

7.- IMPROVED BALLISTIC PROTECTIVE HELMET, according to claims 1 and 6, wherein the suspension assembly incorporates four canvas strips coupled to it and converging in the top of the inside of the helmet to form a crown of nylon chord, which can be adjusted by means of a device allowing the cords to be tightened as required, so as reduce or increase the reticular perimeter of the support assembly as a whole thus ensuring the comfort and equilibrium of the helmet according to individual requirements.

8.- IMPROVED BALLISTIC PROTECTIVE HELMET, according to claim 1, wherein there are shock absorbers, preferably of foam-rubber or any flexible material which is not affected by water, located at the top, side, front and back of the said helmet, lined on the outside and glued inside.

9.- IMPROVED BALLISTIC PROTECTIVE HELMET.

0226782

Fig. 1

0226782

Fig.2

0226782

Neu eingereicht / Newly file
Nouvellement déposé

Fig. 3

0226782

Fig. 4

0226782

Application number

European Patent Office

**EUROPEAN SEARCH REPORT**

EP 86 11 5458

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | WEHRTECHNIK, no. 11, November 1977, page 78, Verlag Wehr und Wissen GmbH, Bonn-Duisdorf, DE; "Israelischer Kunststoffhelm" | 1-8 | F 41 H 1/04<br>A 42 B 3/00 |
| | --- | | |
| Y | US-A-4 286 339 (COOMBS)<br>* Column 2, lines 27-46,64-68; column 3, lines 1-8; figures 1-3 * | 1-8 | |
| | --- | | |
| Y | DE-C- 669 701 (LOEWE)<br>* Whole patent * | 3 | |
| | --- | | |
| Y | US-A-4 062 068 (DAVENPORT)<br>* Column 3, lines 37-56; column 4, lines 17-56; figures 1-12 * | 4,5 | |
| | --- | | TECHNICAL FIELDS SEARCHED (Int. Cl.4) |
| Y | US-A-2 420 522 (LE GRAND DALY)<br>* Column 5, lines 49-69; figure 2 * | 6,7 | F 41 H<br>A 42 B |
| | --- | | |
| Y | US-A-3 055 012 (AILEO)<br>* Column 5, lines 18-55; figures 1-8 * | 8 | |
| | --- | | |
| A | US-A-3 015 103 (ZBIKOWSKI) | | |
| | --- | | |
| A | US-A-2 455 797 (MYERS) | | |
| | --- -/- | | |

The present search report has been drawn up for all claims

| Place of search | Date of completion of the search | Examiner |
|---|---|---|
| THE HAGUE | 19-02-1987 | VAN DER PLAS J.M. |

European Patent
Office

EUROPEAN SEARCH REPORT

0226782
Application number

EP 86 11 5458

# DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| A | US-A-2 735 099 (LEWIS) | | |

-----

TECHNICAL FIELDS
SEARCHED (Int. Cl.4)

The present search report has been drawn up for all claims

| Place of search | Date of completion of the search | Examiner |
|---|---|---|
| THE HAGUE | 19-02-1987 | VAN DER PLAS J.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82